# EUROPÄISCHE PATENTSCHRIFT

(11) **EP 2 190 695 B1**
(45) Veröffentlichungstag und Bekanntmachung des Hinweises auf die Patenterteilung: **15.02.2012**
(21) Anmeldenummer: 08801760.3
(22) Anmeldetag: 29.08.2008
(51) Int. Cl.: F16H 57/02, B60R 16/02

(54) **ANTRIEBSEINHEIT**
DRIVE UNIT
UNITÉ D'ENTRAÎNEMENT

(30) Priorität: 13.09.2007 DE 102007043768
(43) Veröffentlichungstag der Anmeldung: 02.06.2010
(73) Patentinhaber: SEW-EURODRIVE GmbH & Co. KG, 76646 Bruchsal (DE)
(72) Erfinder: DOPPELBAUER, Martin, 75015 Bretten (DE); STANEK, Klaus, 76694 Forst (DE)
(74) Vertreter: Tüngler, Eberhard
(86) Internationale Anmeldenummer: PCT/EP2008/007081
(87) Internationale Veröffentlichungsnummer: WO 2009/036874

(56) Entgegenhaltungen:
- EP-A- 1 203 903
- DE-A1- 10 239 710
- DE-A1- 10 251 031
- DE-A1- 10 310 893
- DE-A1-102004 043 274
- US-A1- 2003 156 009

## Beschreibung

Die Erfindung betrifft eine Antriebseinheit.

Aus der DE 102 51 031 A1 ist ein Getriebesystem bekannt, bei welchem Einheiten Teile besitzen, die aus Kunststoff hergestellt sind, wobei Transpondereinheiten in diese Teile eingelassen sind.

Der Erfindung liegt die Aufgabe zugrunde, einen Baukasten mit Komponenten für eine Antriebseinheit weiterzubilden, wobei die Inbetriebnahme oder Wartung vereinfacht sein soll.

Erfindungsgemäß wird die Aufgabe bei der Antriebseinheit nach den in Anspruch 1 angegebenen Merkmalen gelöst.

Wichtige Merkmale der Erfindung einer Antriebseinheit sind in Anspruch 1 angegeben. Insbesondere ist vorgesehen, dass mindestens zwei Komponenten umfasst sind, wobei eine erste Komponente ein Druckguss-Gehäuse aufweist, in dem ein RFID-Transponder eingegossen ist, wobei der RFID-Transponder eine Information zur Identifizierung der Komponente bereithält. Vorzugsweise bedeckt das Druckguss-Gehäuse den größten Teil, insbesondere mehr als drei Viertel, der Oberfläche des RFID-Transponders. Der RFID-Transponder ist somit vor Beschädigung geschützt, nimmt einen geringen Platz ein und ist für unbefugte Betrachter verborgen. Der RFID-Transponder ist somit nicht durch das Platzangebot beispielsweise auf dem Typenschild begrenzt. Der RFID-Transponder ist zur Identifizierung der Komponente als elektronisches Typenschild verwendbar. Somit sind Parameter speicherbar und für eine Inbetriebnahme elektronisch einlesbar. Vorzugsweise werden die RFID-Transponder vor dem Gießen oder nach dem Gießen mit Parametern und/oder Information beschrieben.

Bei einer vorteilhaften Ausgestaltung umfassen die Komponenten einen Motoranschlusskasten, ein Motorgehäuse, ein Umrichtergehäuse oder ein Getriebegehäuse. Von Vorteil ist dabei, dass eine Vielzahl von Parametern für Inbetriebnahme und Wartung bereitstellbar ist, die sonst aus einem Handbuch übertragen werden müssten.

Bei einer vorteilhaften Ausgestaltung weist der RFID-Transponder einen Speicherbereich auf, in dem Daten und/oder Nachrichten hinterlegbar sind. Vorzugsweise sind die Daten und/oder Nachrichten als xml-Daten hinterlegt. Somit ist der Speicherinhalt des RFID-Transponders als leicht handhabbares Notizbuch oder Nachschlagewerk verwendbar.

Bei einer vorteilhaften Ausgestaltung umfassen die Daten Betriebsparameter der Komponente. Somit ist die Inbetriebnahme erleichtert, und ein Service-Techniker kann die Eigenschaften einer Komponente schnell erfassen.

Bei einer vorteilhaften Ausgestaltung enthalten die Nachrichten jeweils ein Datum und eine Bemerkung, insbesondere eine Service-Information. Vorzugsweise enthält die Service-Information eine Einsatz-Nummer, eine Täligkeitsbeschreibung und/oder einen Zustandsbericht zur Komponente. Somit ist eine Tagebuchfunktion implementiert, die Auskunft über die Geschichte der Komponente, über durchgeführte Wartungsarbeiten oder festgestellte Schäden, gibt. Vorzugsweise sind die Nachrichten nicht überschreibbar oder löschbar oder durch eine Kodierung oder Verschlüsselung gegen Löschen geschützt. Somit ist selbst bei Weiterverkauf der Antriebseinheit der neue Nutzer über die Vorgeschichte, insbesondere eine regelmäßige Wartung, informiert.

Bei einer vorteilhaften Ausgestaltung umfasst eine zweite Komponente ein RFID-Lesegerät. Somit kann die Information der Komponenten über eine Fernwartung ausgelesen werden.

Bei einer vorteilhaften Ausgestaltung ist der Leseradius, also der empfindliche Empfangsbereich, des RFID-Lesegeräts auf die baulichen Abmessungen, insbesondere das Doppelte einer charakteristischen Baulänge, der Antriebseinheit beschränkt oder verfügt das RFID-Lesegerät über Mittel zur Bestimmung des Abstands zu einem RFID-Transponder. insbesondere ein Mittel zur Bestimmung der Antwortzeit des RFID-Transponders. Von Vorteil ist dabei, dass eine fehlerhafte Erfassung von Signalen einer benachbarten Antriebseinheit vermieden wird- Von Vorteil ist dabei, dass eine Festlegung, welche RFID-Transponder anzufragen sind, entfällt.

Bei einer vorteilhaften Ausgestaltung umfasst die zweite Komponente Mittel Erzeugung eines Spannungssignals oder Körperschallsignals. Vorzugsweise sind erste und zweite Komponente mechanisch oder elektrisch gekoppelt zur Durchleitung der erzeugten Signale. Von Vorteil ist dabei, dass eine redundante, fehlerarme Signalübertragung möglich ist.

Bei einer vorteilhaften Ausgestaltung verfügt die zweite Komponente über ein Mittel zur Erzeugung eines Körperschallsignals im Gehäuse und umfasst die erste Komponente ein Mittel zur Detektion des über das Gehäuse weitergeleiteten Körperschallsignals und ist mit der zweiten Komponente mechanisch gekoppelt. Von Vorteil ist dabei, dass das Verfahren sicher nur die zur Antriebselnhelt gehörenden Komponenten erfasst. Denn weitere Antriebseinheiten sind mit der Antriebseinheit höchstens über ein gemeinsames Fundament oder einen gemeinsamen Rahmen oder Tisch verbunden, in dem die Körperschallsignale gedämpft sind.

Bei einer vorteilhaften Ausgestaltung verfügt die zweite Komponente über ein Mittel zur Erzeugung eines Spannungssignals im Gehäuse und umfasst die erste Komponente ein Mittel zur Detektion des über das Gehäuse weitergeleiteten Spannungssignals und Ist mit der zweiten Komponente elektrisch gekoppelt. Somit ist vorteilhaft ein alternatives Verfahren zur Identifizierung der eigenen Komponenten angegeben.

Bei einer vorteilhaften Ausgestaltung ist das RFID-Lesegerät über einen Datenbus mit Busteilnehmern verbunden. Von Vorteil ist dabei, dass ein Fernauslesen der Information in den RFID-Transpondern von einer zentralen Steuerung durchführbar ist.

Bei einer vorteilhaften Ausgestaltung umfasst eine Komponente ein RFID-Lesegerät, das an eine Busleitung angeschlossen ist oder über ein Funknetzwerk mit einer zentralen Steuereinheit verbunden ist, wobei jede weitere Komponente der Antriebseinheit einen RFID-Transponder umfasst, der in ein Druckguss-Gehäuse eingegossen ist. Ein Funknetzwerk wird somit als ein Datenbus für die Weiterleitung der ausgelesenen Information betrachtet. Von Vorteil ist bei der Erfindung, dass alle Komponenten der Antriebseinheit automatisiert erfasst werden können. Die Inbetriebnahme kann somit von einer Zentrale aus erfolgen.

Bei einer vorteilhaften Ausgestaltung ist das RFID-Lesegerät in einen Umrichter der Antriebseinheit integriert. Somit ist die Elektronik und die Datenbus-Anbindung des Umrichters mitnutzbar durch das Lesegerät.

Bei einer vorteilhaften Ausgestaltung ist das RFID-Lesegerät in ein Zustandsüberwachungsmodul integriert. Somit ist die Elektronik und die Datenbus-Anbindung des Zustandsüberwachungsmoduls mitnutzbar durch das RFID-Lesegerät. Das Zustandsüberwachungsmodul ist vorteilhaft mit einer Busleitung oder einem Funknetzwerk zum Datenaustausch und zur Weitergabe der ausgelesenen Information verbunden. Zudem ist eine Fernerfassung des Zustands der Komponenten durchführbar. Besonders vorteilhaft ist es, wenn die RFID-Transponder in den Gehäuseteilen Sensoren zur Zustandsüberwachung, beispielsweise Beanspruchung, Temperatur, Schwingungsentwicklung oder Geräuschentwicklung, umfassen, und das RFID-Lesegerät das Zustandsüberwachungsmodul mit den so ausgelesenen Zustandsinformationen versorgt.

Eine vorteilhafte Anwendung der Erfindung bei einem Verfahren zur Wartung von Komponenten einer Antriebseinheit welche nicht luhalt der Erfindung ist kann vorsehen, dass bei einer Antriebseinheit nach einem der vorangegangenen Ansprüche ein Tagebucheintrag, umfassend Service-Information, in einem RFID-Transponder hinterlegt wird. Somit ist für nachfolgende Wartungseinsätze die Geschichte der Antriebseinheit, insbesondere der Komponenten für sich, zurückverfolgbar. Sind die RFID-Transponder in Gehäuseteile eingegossen, so ist die gespeicherte Information gegen Zerstörung und gegen Entfernen gesichert. Bei entsprechender Platzierung ist die Anwesenheit eines RFID-Transponders überhaupt verborgen. In diesem Fall antwortet der RFID-Transponder auf ein Signal zum Auslesen nur, wenn ein bestimmter Code gesendet wird. Die im Tagebucheintrag vermerkten Informationen sind über eine Busleitung auch von Ferne abrufbar. Somit ist ein Service-Einsatz von Ferne überwachbar. Beispielsweise wird am Gehäuseteil des Motors durch angebrachte Kontaktsensoren oder Erschütterungssensoren automatisch vermerkt, wenn das Getriebe abgenommen wird. Somit ist ein unbefugtes Öffnen der Antriebseinheit nachweisbar.

Eine vorteilhafte Anwendung der Erfindung bei einem Verfahren zur Identifizierung der Komponenten einer Antriebseinheil welche nicht luhalt der Erfindung ist kann vorsehen, dass eine Komponente ein RFID-Lesegerät umfasst, das als Busteilnehmer oder als Teilnehmer in einem Funknetzwerk ausgebildet ist, und mindestens eine weitere Komponente der Antriebseinheit einen RFID-Transponder umfasst, der in ein Druckguss-Gehäuse eingegossen ist, wobei das RFID-Lesegerät die Informationen zur Identifizierung aus den RFID-Transpondern liest und an einen weiteren Busteilnehmer übermittelt. Von Vorteil ist dabei, dass eine Inbetriebnahme von einer Zentrale aus oder sogar über das Internet durchführbar ist. Ein Service-Techniker muss nicht mehr die Daten jeder einzelnen Komponente vor Ort ablesen, eingeben oder einscannen. Zudem ist eine automatisierte Überprüfung der Richtigkeit der Konfiguration der Antriebseinheit durchführbar.

Bei einer vorteilhaften Ausgestaltung der Anwendung sendet das RFID-Lesegerät zum Auslesen der Information zur Identifizierung eine Anfrage an RFID-Transponder und gleichzeitig ein weiteres Signal, wobei die RFID-Transponder nur dann ein Antwortsignal senden, wenn sie mit der Anfrage das weitere Signal detektiert haben. Vorzugsweise ist das weitere Signal ein Körperschallsignal oder ein Spannungssignal. Von Vorteil ist dabei, dass nur bestimmte RFID-Transponder, beispielsweise nur die RFID-Transponder der eigenen Antriebseinheit, ansprechbar sind.

Bei einer vorteilhaften Ausgestaltung der Anwendung übermittelt das RFID-Lesegerät die ausgelesene Information zur Identifizierung nur dann an den weiteren Busteilnehmer, wenn die Antwortzeit unter einem Schwellwert liegt, oder das RFID-Lesegerät übermittelt die ausgelesene Information zur Identifizierung mit der Antwortzeit an den Busteilnehmer. Somit ist ein einfaches Verfahren zum Ausschluss von Antwortsignalen benachbarter Antriebseinheiten beschrieben. Dieser Ausschluss kann im RFID-Lesegerät oder in der zentralen Steuerung erfolgen.

Bei einer vorteilhaften Ausgestaltung der Anwendung sendet das RFID-Lesegerät nacheinander eine Anfrage auf verschiedenen Frequenzen als Trägerfrequenzen per Frequenzmodulation oder Amplitudenmodulation oder die Anfrage des RFID-Lesegeräts enthält eine Information zum angesprochenen Komponententyp, wie Motor und/oder Getriebe und/oder Geber. Beispielsweise ist diese Information eine Identifikationsnummer, Von Vorteil ist dabei, dass die Komponententypen, die eine Antriebseinheit aufweist, nacheinander ansprechbar sind. Gleichzeitiges Antworten oder ein Vermischen der Antwortsignale ist somit vermieden.

Bei einer vorteilhaften Ausgestaltung der Anwendung umfasst das RFID-Lesegerät Mittel zum Senden auf verschiedenen Frequenzen, beispielsweise im UHF-Bereich und bei 13,56 MHz, und die RFID-Transponder umfassen eine Antenne, die für alle verwendbaren Frequenzen optimiert ist. Somit ist die Antriebseinheit in verschiedenen Ländern, In denen verschiedene Frequenzbänder für RFID-Technik freigegeben sind, und in verschiedenen Anwendungen mit unterschiedlichen elektromagnetischen Verträglichkeitseigenschaften einsetzbar, und das RFID-Lesegerät kann die jeweils passende oder geeignete Trägerfrequenz wählen.

Eine vorteilhafte Anwendung der Erfindung bei einem Baukaster welcher nicht luhalt der Erfindung ist sieht vor, dass der Baukasten mit Komponenten für Antriebseinheiten ausgestattet ist, dass jede Komponente ein Druckguss-Gehäuse aufweist, in dem ein RFID-Transponder eingegossen ist, wobei jedem Komponententyp, wie Getriebe, Motor, Motoranschlusskasten und/oder Geber, eine eindeutige Arbeitsfrequenz oder eine eindeutige Identifikationsnummer des RFID-Transponders zugeordnet ist. Von Vorteil ist dabei, dass eine Antriebseinheit, die aus verschiedenen Komponenten zusammengesetzt sein kann, automatisiert in Betrieb genommen werden kann, insbesondere per Fernbedienung über einen Datenbus.

Eine vorteilhafte Anwendung der Erfindung bei einem Verfahren zur Herstellung einer Antriebseint welche nicht luhalt der Erfindung ist sieht vor, dass die folgenden Schritte in zeitlicher Reihenfolge ausgeführt werden:
vi) Bereltstellen von ersten Komponenten mit in ein Gehäuseteil eingegossenem RFID-Transponder,
vii) Bereitstellen mindestens einer zweiten Komponente mit einem RFID-Lesegerät,
viii) Zusammenbau von mindestens einer ersten Komponente mit einer zweiten Komponente zur Montage der Antriebseinheit,
ix) Auslesen von Daten aus den RFID-Transpondern der in Schritt iii) montierten ersten Komponenten durch das RFID-Lesegerät,
x) Übermitteln der ausgelesenen Daten an einen Busteilnehmer.
Von Vorteil ist dabei, dass Eingabefehler vermieden werden, da das RFID-Lesegerät und weiter eine zentrale Steuereinheit, beispielsweise im Umrichter oder in einem Bus-Master, die montierten Komponenten automatisch erfasst.

Bei einer vorteilhaften Ausgestaltung der Anwendung wird in Schritt iv) ein erfindungsgemäßes Verfahren zur Identifizierung der Komponenten einer erfindungsgemäßen Antriebseinheit ausgeführt. Somit lassen sich die beschriebenen Vorteile der Erfindung bei dem Verfahren nutzen. Beispielsweise kann bei der Inbetriebnahme automatisch erfasst werden, welchen Zustand die Komponenten aufweisen, wann eine nächste Wartung erfolgen soll oder ob gebrauchte Komponenten mit Defekten und eingeschränkter Benutzbarkeit eingesetzt werden.

### Bezugszeichenliste

- 1: Antriebseinheit
- 2: Getriebe
- 3: Adapter
- 4: Motor
- 5: Geber
- 6: Anschlusskasten
- 7: Zustandsüberwachungsmodul
- 8: Datenbus
- 11: Antriebseinheit
- 12: Getriebe
- 13: Adapter
- 14: Motor
- 15: Geber
- 16: Anschlusskasten
- 17: Zustandsüberwachungsmodul
- 20: RFID-Transponder
- 21: RFID-Transponder
- 30: Funkanfrage
- 31,: 32, 33, 34 Funkantwort
- 35,: 36, 37 Körperschallsignal
- 40: Gehäuse
- 41: RFID-Transponder
- 42: Träger
- 43: Chip
- 44: Trägerkante
- 45: Antenne
- 46: Antennenende
- 47: Körperschallsensor
- 48: Spannungspulssensor
- 49: Referenzkontakt

Die Erfindung wird nun anhand von Abbildungen näher erläutert:

Es zeigt
- Figur 1 eine Anlage mit Antriebseinheiten und
- Figur 2 einen Ausschnitt eines Druckguss-Gehäuses mit eingegossenem RFID-Transponder.

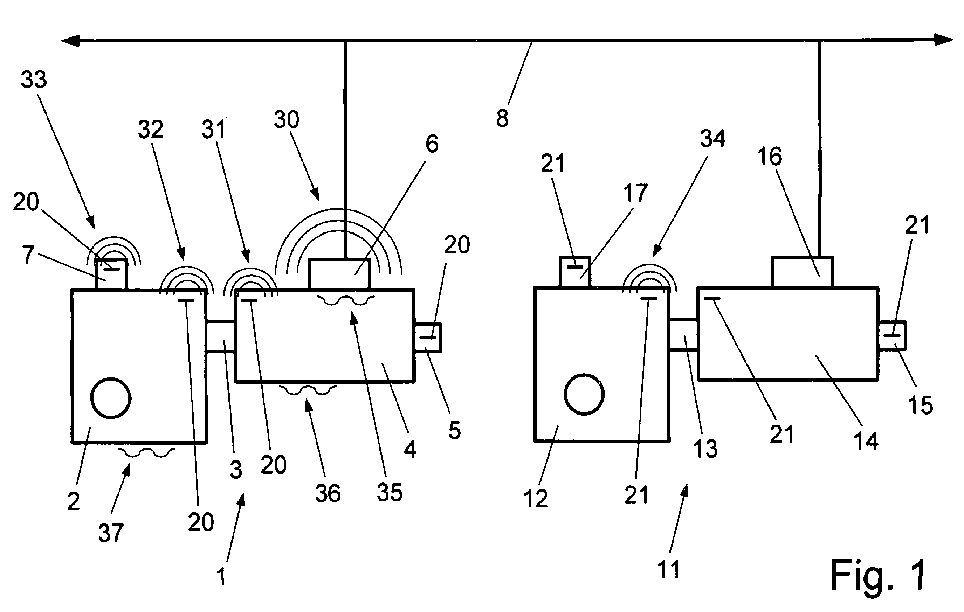

In Figur 1 ist eine Anlage mit einer ersten Antriebseinheit 1 und einer zweiten Antriebseinheit 11 dargestellt, die an einen gemeinsamen Datenbus 8 angeschlossen sind. Der Datenbus 8 ist mit einer nicht dargestellten zentralen Steuereinheit verbunden.

Die Antriebseinheit 1 umfasst einen Motor 4 mit einem Motoranschlusskasten 6 und einem Geber 5 und ein Getriebe 2 mit einem Zustandsüberwachungsmodul 7. Das Getriebe 2 wird über einen Adapter 3 vom Motor 5 angetrieben. Das Zustandsüberwachungsmodul 7 ist mit nicht gezeigten Sensoren verbunden, die den Zustand und die Belastung des Getriebes 2 in regelmäßigen zeitlichen Abständen erfassen.

Getriebe 2, Adapter 3, Motor 4, Geber 5, Motoranschlusskasten 6 und Zustandsüberwachungsmodul 7 bilden die Komponenten, aus denen die Antriebseinheit zusammengesetzt ist.

Die Komponenten Getriebe 2, Motor 4, Geber 5 und Zustandsüberwachungsmodul 7 sind mit einem RFID-Transponder 20 bestückt. Der RFID-Transponder 20 ist dabei in die Aluminium-Druckguss-Gehäuse der jeweiligen Komponente eingegossen.

Die zweite Antriebseinheit 11 ist ebenfalls aus Komponenten zusammengesetzt. Sie umfasst ein Getriebe 12, einen Adapter 13, einen Motor 14, einen Geber 15, einen Motoranschlusskasten 16 und ein Zustandsüberwachungsmoduol 17. Die Komponenten der zweiten Antriebseinheit 11 sind somit jeweils vom gleichen Komponententyp wie die des ersten Antriebs 1 aber von anderer Ausprägung. Beispielsweise weist der Motor 14 eine andere Leistungsklasse auf als der Motor 1 und das Getriebe 12 ein anderes Nenndrehmoment als das Getriebe 2. Beispielsweise überwacht das Zustandsüberwachungsmodul 17 andersartige Sensoren als das Zustandsüberwachungsmodul 7 und wertet die Daten mit einem anderen Algorithmus aus.

In das Getriebe 12, den Motor 14, den Geber 15 und das Zustandsüberwachungsmodul 17 sind jeweils RFID- Transponder 17 eingegossen.

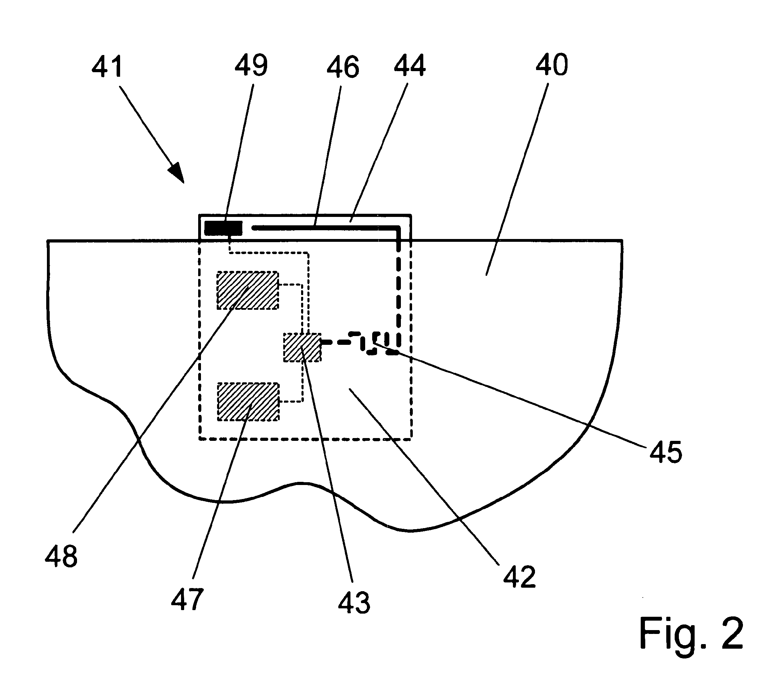

Figur 2 zeigt einen RFID-Transponder 41, der in ein Gehäuse 40 eingegossen ist. Das Gehäuse 40 ist als Aluminium-Druckguss gefertigt, und der RFIO-Transponder 41 ist während der Gussherstellung in das Gehäusematerial eingelegt worden. Somit umgibt das Gehäuse 40 den RFID-Transponder 41 im Wesentlichen vollständig. Die Oberfläche des Trägers 42 des RFID-Transponders 41 ist zum größten Teil, insbesondere zu mehr als drei Vierteln, vom Gehäuse 40 umschlossen.

Der Träger 42 ist somit im Material eingebettet und nicht parallel zur Oberfläche des Gehäuses 40. Die Normale des Trägers 42 nimmt daher einen Winkel zur Normale der Oberfläche des Gehäuses 40 ein.

Auf dem Träger 42 ist ein Chip 43 angeordnet, der an eine Antenne 45 angeschlossen ist. Eine Kante 44 des Trägers 42 ragt aus dem Gehäuse 40 heraus. Ein Antennenende 46 der Antenne 45 verläuft im Bereich der herausragenden Kante 44.

Auf dem Träger 42 sind ferner ein Körperschallsensor 47 in Form eines Oberflächenwellesensors und ein Spannungspulssensor 48 angebracht und mit dem Chip 43 verbunden. Im Bereich der Kante 44 ist ein Referenzkontakt 49 angeordnet, gegen den der Spannungspulssensor 48 Spannungspulse im Gehäuse 40 detektiert.

In dem Chip 43 ist ein Speicherbereich vorgesehen, der Daten zur Identifizierung der Komponente enthält. Diese Daten umfassen Angaben zum Komponententyp und je nach Komponentelyp zu Hersteller, Gewicht, Bauform, Nennmoment, Herstellungsdatum, Nennstrom, Nennfrequenz, installierten Optionen, Schmierstoff und Schmierstoffmenge und weitere komponentenspezifische Angaben. Dieser Spelcherberelch Ist als ROM ausgebildet. Die Daten sind in der Form von Feldnamen mit einem Dateneintrag als xml-Datei abgespeichert.

In dem Chip 43 ist weiter ein beschreibbarer Speicherbereich vorgesehen, in dem ein Tagebuch für Wartungsarbeiten hinterlegt ist. Das Tagebuch kann von einem Servicetechniker um Einträge ergänzt werden, die an der Komponente durchgeführte Wartungsarbeiten betreffen. Jeder Eintrag enthält ein Datum und eine Nummer des Wartungseinsatzes und Bemerkungen wie durchgeführte Arbeiten und/oder Zustand der Komponente. Die Einträge sind ebenfalls im xml-Format hinterlegt. Der Speicherbereich ist so ausgestaltet, dass Einträge hinzugefügt, aber nicht gelöscht werden können. Somit ist die Geschichte der Komponente hinterlegt und nachvollziehbar. Jeder Eintrag enthält zudem eine Prüfziffer, welche die Durchführung der Wartungsarbeit von einem autorisierten Fachmann belegt.

In dem Chip 43 Ist weiter ein frei beschreibbarer und löschbarer Speicherbereich ausgebildet, die der Anwender der Antriebseinheit frei verwenden kann.

Der Motoranschlusskasten 6 enthält ein RFID-Lesegerät, das in einen Umrichter integriert ist. Nach Zusammenbau der Antriebseinheit 1 und nach dem Anschluss an den Datenbus 8 erhält das RFID-Lesegerät einen Befehl zur Identifizierung der Komponenten der Antriebseinheit 1.

Das RFID-Lesegerät sendet daraufhin über Funk eine Anfrage 30, die von den RFID-Transpondern 20 der Antriebseinheit 1 empfangen wird.

Diese senden jeweils ein Antwortsignal 31, 32, 33 zurück mit Daten zur Identifizierung. Um eine Unterscheidung zu ermöglichen, antworten die RFID-Transponder 20 auf Funkanfrage 30 mit unterschiedlichen Frequenzen, die das RFID-Lesegerät nacheinander abstrahlt.

In einem weiteren Ausführungsbeispiel sendet das RFID-Lesegerät mit der Funkanfrage 30 eine Information, welcher Komponententyp antworten soll, und es antwortet nur der betreffende RFID-Transponder. Beispielsweise antwortet auf die Funkanfrage 30 für Getriebe nur der RFID-Transponder 32 des Getriebes 2 oder auf die Funkanfrage 30 für Motoren nur der RFID-Transponder 31 des Motors 4.

Vorzugsweise sind die Reichweite der Funksignale des Lesegeräts und der empfindliche Empfangsbereich des Signalempfangs auf die äußeren Baumaße der eigene Antriebseinheit, also auf einen Meter oder sogar einen halben Meter, beschränkt. Die Schwelle unterhalb der ein Transpondersignal am Lesegerät nicht mehr erkannt wird, ist also so eingestellt, dass für die eingesetzten RFID-Transponder Signale nur dann am RFID-Lesegerät erkannt werden, wenn sie in unmittelbarer Umgebung der Antriebseinheit, also insbesondere innerhalb des Doppelten einer charakteristischen Baulänge der Antriebseinheit, abgegeben werden. Somit ist sichergestellt, dass das Signal 34 der benachbarten Antriebseinheit nicht gewertet wird.

Wenn die Reichweite des RFID-Lesegeräts im Motoranschlusskasten 6 so groß ist, dass auch die Antriebseinheit 11 von der Funkanfrage 30 erreicht wird, so kann es passieren, dass auch der RFID-Transponder 21 des Getriebes 12 ein Antwortsignal 34 aussendet. Zur Unterscheidung der Antwortsignale 31, 32, 33 der eigenen Antriebseinheit 1 von denjenigen 34 einer weiteren Antriebseinheit 11 beslimmt das RFID-Lesegerät die Zeitspanne zwischen Funkanfrage 30 und Antwort 31, 32, 33, 34, also die Summe der Laufzeit der Signale und die Reaktionszeit des RFID-Transponders 20, 21. Überschreitet die Laufzeit einen Schwellwert, beispielsweise 2 ns, so stammt das Antwortsignal von einer anderen Antriebseinheit und wird vom RFID-Lesegerät ignoriert.

Alternativ sendet das RFID-Lesegerät oder ein mit diesem verbundener Generator, beispielsweise ein Piezoelement, gleichzeitig mit der Funkanfrage 30 ein Körperschallsignal 35 aus, wobei gleichzeitig hier gemeinsam innerhalb eines gegenüber der zeitlichen Länge der Funkanfrage 30 kurzen Zeitintervalls bedeutet. Dieses Körperschallsignal 35 wird durch die mechanische Verbindung des Motoranschlusskastens 6 mit dem Motor 4 als ein Körperschallsignal 36 und weiter über die mechanische Verbindung vom Gehäuse des Motors 4 mit dem Gehäuse des Getriebes 2 als ein Körperschallsignal 37 an den RFID-Transponder des Getriebes 2 übertragen und von diesem detektiert. Das Körperschallsignal 35 wird an alle mit dem Gehäuse des Motoranschlusskastens 6 mechanisch starr verbundenen Komponenten übertragen.

Der RFID-Transponder umfasst, wie in Figur 2 dargestellt, zu diesem Zweck einen Körperschallsensor 47 auf dem Träger 42. Dieser Körperschallsensor 47 ist mit dem Chip 43 verbunden. Eine logische Schaltung im Chip 43 verhindert eine Antwort 32 des RFID-Transponders 41 auf eine Funkanfrage 30 für den Fall, dass kein Körperschallsignal 37 delektiert wird.

Der RFID-Transponder 21 des Getriebes 12 detektiert das Körperschallsignal nicht, da das Gehäuse des Getriebes 12 nicht mechanisch starr mit dem Gehäuse des Getriebes 2 verbunden ist oder weil der mechanische Verbindungsweg zu lang und das Körperschallsignal zu stark gedämpft ist. Besagter RFID-Transponder 21 des Getriebes 12 sendet daher kein Antwortsignal 34.

Alternativ gibt das RFID-Lesegerät oder ein mit diesem verbundener Generator gleichzeitig mit der Funkanfrage 30 ein Spannungssignal auf das Gehäuse des Motoranschlusskasten 6, wobei gleichzeitig hier gemeinsam innerhalb eines gegenüber der zeitlichen Länge der Funkanfrage 30 kurzen Zeitintervalls bedeutet. Dieses Spannungssignal wird an alle mit dem Motoranschlusskasten elektrisch verbundenen Komponenten übertragen. Die zugehörigen RFID-Transponder 20 detektieren dieses und senden auf die Funkanfrage 30 eine Antwort 31, 32, 33.

Der RFID-Transponder 21 des Getriebes 12 detektiert das Spannungssignal nicht, da das Gehäuse des Getriebes 12 nicht elektrisch mit dem Gehäuse des Getriebes 2 verbunden ist oder weil der elektrische Leitungsweg zu lang und das Spannungssignal gedämpft ist. Besagter RFID-Transponder 21 des Getriebes 12 sendet daher kein Antwortsignal 34.

Bei einem weiteren Ausführungsbeispiel sind die Komponenten einer Antriebseinheit an ein gemeinsames Kabel angeschlossen, über welches das Spannungssignal übermittelt wird. Alternativ ist das Kabel in das Gehäuse integriert.

## Patentansprüche

1. Antriebseinheit (1, 11), umfassend mindestens zwei Komponenten (2, 3, 4, 5, 6, 7, 12, 13, 14, 15, 16, 17),
**dadurch gekennzeichnet, dass**
eine erste Komponente (2, 3, 4, 5, 6, 7, 12, 13, 14, 15, 16, 17) ein Aluminium-Druckguss-Gehäuseteil aufweist,
in das ein RFID-Transponder (20, 21, 41) eingegossen ist,
wobei der RFID-Transponder (20, 21, 41) eine Information zur Identifizierung der Komponente (2, 3, 4, 5, 6, 7, 12, 13, 14, 15, 16, 17) bereithält und das Aluminium-Druckguss-Gehäuseteil den größten Teil, insbesondere mehr als drei Viertel, der Oberfläche des RFID-Transponders (20, 21, 41) bedeckt,
dass ein Träger des RFID-Transponders (20, 21, 41) in das Aluminium-Druckguss-Gehäuseteil eingebettet und nicht parallel zur Oberfläche des Aluminium-Druckguss-Gehäuseteils angeordnet ist,
wobei die Normale des Trägers einen Winkel zur Normale der Oberfläche des Aluminium-Druckguss-Gehäuseteils einnimmt,
dass auf dem Träger ein Chip angeordnet ist, der an eine Antenne (45) angeschlossen ist, und dass eine Kante (44) des Trägers aus dem Gehäuse herausragt,
wobei ein Antennenende (46) der Antenne (45) im Bereich der herausragenden Kante (44) verläuft.

2. Antriebseinheit (1, 11) nach Anspruch 1,
**dadurch gekennzeichnet, dass**
der RFID-Transponder (20, 21, 41) einen Speicherbereich aufweist, in dem Daten, insbesondere Betriebsparameter der Komponente (2, 3, 4, 5, 6, 7, 12, 13, 14, 15, 16, 17) umfassende Daten, hinterlegbar sind, insbesondere wobei die Daten als xml-Daten hinterlegt sind.

3. Antriebseinheit (1, 11) nach Anspruch 1 oder 2,
**dadurch gekennzeichnet, dass**
der RFID-Transponder (20, 21, 41) einen Speicherbereich aufweist, in dem Nachrichten, insbesondere nicht überschreibbare oder löschbare Nachrichten, hinterlegbar sind, insbesondere wobei die Nachrichten als xml-Daten hinterlegt sind.

4. Antriebseinheit (1, 11) nach Anspruch 3,
**dadurch gekennzeichnet, dass**
die Nachrichten jeweils ein Datum und eine Bemerkung, insbesondere eine Service-Information, enthalten, Insbesondere wobei die Service-Information eine Einsatz-Nummer, eine Tätigkeitsbeschreibung und/oder einen Zustandsbericht zur Komponente (2, 3, 4, 5, 6, 7, 12, 13, 14, 15, 16, 17) enthält.

5. Antriebseinheit (1, 11) nach einem der vorangegangenen Ansprüche,
**dadurch gekennzeichnet, dass**
eine zweite Komponente (6) ein RFID-Lesegerät umfasst,
insbesondere wobei
der empfindliche Empfangsbereich des RFID-Lesegeräts im Wesentlichen den baulichen Abmessungen der Antriebseinheit (1, 11) entspricht
oder
das RFID-Lesegerät über Mittel zur Bestimmung des Abstands zu einem RFID-Transponder (20, 21, 41) verfügt, insbesondere ein Mittel zur Bestimmung der Antwortzeit des RFID-Transponders (20, 21, 41).

6. Antriebseinheit (1, 11) nach Anspruch 5,
**dadurch gekennzeichnet, dass**
das RFID-Lesegerät über einen Datenbus mit Busteilnehmern verbunden ist
und/oder
dass eine Komponente (6) ein RFID-Lesegerät umfasst, das an eine Busleitung angeschlossen ist,
wobei jede weitere Komponente (2, 3, 4, 5, 6, 7, 12, 13, 14, 15, 16, 17) der Antriebseinheit (1, 11) einen RFID-Transponder (20, 21, 41) umfasst, der in ein Druckguss-Gehäuse eingegossen ist.

7. Antriebseinheit (1, 11) nach Anspruch 5 oder 6,
**dadurch gekennzeichnet, dass**
dass das RFID-Lesegerät in einen Umrichter der Antriebseinheit (1, 11) integriert ist
oder
dass das RFID-Lesegerät in ein Zustandsüberwachungsmodul (7) integriert ist.

8. Antriebseinheit (1, 11) nach einem der Ansprüche 5 bis 7,
**dadurch gekennzeichnet, dass**
dass das RFID-Lesegerät Mittel zum Senden auf verschiedenen Frequenzen umfasst,
beispielsweise im UHF-Bereich und bei 13,56 MHz, und die RFID-Transponder (20, 21, 41) eine Antenne (45) umfassen, die für alle verwendbaren Frequenzen optimiert ist.

9. Antriebseinheit nach einem der Ansprüche 5 bis 8,
**dadurch gekennzeichnet, dass**
die zweite Komponente (6) Mittel zur Erzeugung eines Spannungssignals umfasst,
insbesondere wobei erste (2, 3, 4, 5, 7, 12, 13, 14, 15, 17) und zweite Komponente (6) elektrisch gekoppelt sind zur Durchleitung der erzeugten Signale.

10. Antriebseinheit nach einem der Ansprüche 5 bis 9.
**dadurch gekennzeichnet, dass**
die zweite Komponente (6) ein Mittel zur Erzeugung eines Spannungssignals im Gehäuse umfasst und die erste Komponente (2, 3, 4, 5, 7, 12, 13, 14, 15, 17) ein Mittel (48) zur Detektion des über das Gehäuse weitergeleiteten Spannungssignals umfasst und mit der zweiten Komponente (6) elektrisch gekoppelt ist.

11. Antriebseinheit nach einem der Ansprüche 5 bis 10,
**dadurch gekennzeichnet, dass**
die zweite Komponente (6) Mittel zur Erzeugung eines Körperschallsignals (35, 36, 37) umfasst, insbesondere wobei erste (2. 3, 4, 5, 7, 12, 13, 14, 15, 17) und zweite Komponente (6) mechanisch gekoppelt sind zur Durchleitung der erzeugten Signale.

12. Antriebseinheit nach einem der Ansprüche 5 bis 11,
**dadurch gekennzeichnet, dass**
die zweite Komponente (6) ein Mittel zur Erzeugung eines Körperschallsignals (35, 36, 37) im Gehäuse umfasst und die erste Komponente (2, 3, 4, 5, 7, 12, 13, 14, 15, 17) ein Mittel (47) zur Detektion des über das Gehäuse weitergeleiteten KörpersChallsignals (35, 36, 37) umfasst und mit der zweiten Komponente (2, 3, 4, 5, 7, 12, 13, 14, 15, 17) mechanisch gekoppelt ist, insbesondere zur Weiterleitung des Körperschalls.

13. Antriebseinheit nach einem der vorangegangenen Ansprüche,
**dadurch gekennzeichnet, dass**
die Komponenten (2, 3, 4, 5, 6, 7, 12, 13, 14, 15, 16, 17) einen Motoranschlusskasten (6), ein Motorgehäuse, ein Umrichtergehäuse oder ein Getriebegehäuse umfassen.

## Claims

1. Drive unit (1, 11), comprising at least two components (2, 3, 4, 5, 6, 7, 12, 13, 14, 15, 16, 17),
**characterised in that**
a first component (2, 3, 4, 5, 6, 7, 12, 13, 14, 15, 16, 17) has an aluminium diecast housing part,
into which an RFID transponder (20, 21, 41) is cast,
the RFID transponder (20, 21, 41') holding information for identifying the component (2, 3, 4, 5, 6, 7, 12, 13, 14, 15, 16, 17), and the aluminium diecast housing part covering the majority, in particular more than three-quarters, of the surface of the RFID transponder (20, 21, 41),
**in that** a carrier of the RFID transponder (20, 21, 41) is embedded in the aluminium diecast housing part and not arranged parallel to the surface of the aluminium diecast housing part,
the normal of the carrier assuming an angle to the normal of the surface of the aluminium diecast housing part,
**in that** a chip which is connected to an antenna (45) is arranged on the carrier,
and **in that** an edge (44) of the carrier projects out of the housing,
an antenna end (46) of the antenna (45) running in the region of the projecting edge (44).

2. Drive unit (1, 11) according to Claim 1,
**characterised in that**
the RFID transponder (20, 21, 41) has a memory area, in which data, in particular data comprising operating parameters of the component (2, 3, 4, 5, 6, 7, 12, 13, 14, 15, 16, 17), can be stored, in particular the data being stored as xml data.

3. Drive unit (1, 11) according to Claim 1 or 2,
**characterised in that**
the RFID transponder (20, 21, 41) has a memory area, in which messages, in particular non-overwritable or non-erasable messages can be stored, in particular the messages being stored as xml data.

4. Drive unit (1, 11) according to Claim 3,
**characterised in that**
the messages each include a date and a comment, in particular service information, in particular the service information including a job number, an activity description and/or a condition report on the component (2, 3, 4, 5, 6, 7, 12, 13, 14, 15, 16, 17).

5. Drive unit (1, 11) according to one of the preceding claims,
**characterised in that**
a second component (6) comprises an RFID reader,
in particular
the sensitive reception range of the RFID reader corresponding substantially to the structural dimensions of the drive unit (1, 11)
or
the RFID reader having means for determining the distance to an RFID transponder (20, 21, 41), in particular a means for determining the response time of the RFID transponder (20, 21, 41).

6. Drive unit (1, 11) according to Claim 5,
**characterised in that** the RFID reader is connected to bus nodes via a data bus
and/or
**in that** a component (6) comprises an RFID reader which is connected to a bus line,
each further component (2, 3, 4, 5, 6, 7, 12, 13, 14, 15, 16, 17) of the drive unit (1, 11) comprising an RFID transponder (20, 21, 41) which is cast into a diecast housing.

7. Drive unit (1, 11) according to Claim 5 or 6,
**characterised in that**
the RFID reader is integrated into a converter of the drive unit (1, 11)
or
**in that** the RFID reader is integrated into a condition monitoring module (7).

8. Drive unit (1, 11) according to one of Claims 5 to 7,
**characterised in that**
the RFID reader comprises means for transmitting on different frequencies, for example in the UHF range and at 13.56 MHz, and the RFID transponders (20, 21, 41) comprise an antenna (45) which is optimised for all usable frequencies.

9. Drive unit according to one of Claims 5 to 8,
**characterised in that**
the second component (6) comprises means for generating a voltage signal, in particular the first component (2, 3, 4, 5, 7, 12, 13, 14, 15, 17) and the second component (6) being electrically coupled for transmitting the generated signals.

10. Drive unit according to one of Claims 5 to 9,
**characterised in that**
the second component (6) comprises a means for generating a voltage signal in the housing, and the first component (2, 3, 4, 5, 7, 12, 13, 14, 15, 17) comprises a means (48) for detecting the voltage signal transmitted via the housing and is electrically coupled to the second component (6).

11. Drive unit according to one of Claims 5 to 10,
**characterised in that**
the second component (6) comprises means for generating a structure-borne sound signal (35, 36, 37), in particular the first component (2, 3, 4, 5, 7, 12, 13, 14, 15, 17) and the second component (6) being mechanically coupled for transmitting the generated signals.

12. Drive unit according to one of Claims 5 to 11,
**characterised in that**
the second component (6) comprises a means for generating a structure-borne sound signal (35, 36, 37) in the housing, and the first component (2, 3, 4, 5, 7, 12, 13, 14, 15, 17) comprises a means (47) for detecting the structure-borne sound signal (35, 36, 37) transmitted via the housing and is mechanically coupled to the second component (2, 3, 4, 5, 7, 12, 13, 14, 15, 17) , in particular for transmitting the structure-borne sound.

13. Drive unit according to one of the preceding claims,
**characterised in that**
the components (2, 3, 4, 5, 6, 7, 12, 13, 14, 15, 16, 17) comprise a motor connection box (6), a motor housing, a converter housing or a gearing housing.

## Revendications

1. Unité d'entraînement (1, 11) comprenant au moins deux composants (2, 3, 4, 5, 6, 7, 12, 13, 14, 15, 16, 17),
**caractérisée en ce que**
un premier composant (2, 3, 4, 5, 6, 7, 12, 13, 14, 15, 16, 17) présente une partie de boîtier en fonte d'aluminium,
dans lequel est coulé un transpondeur RFID (20, 21, 41),
le transpondeur RFID (20, 21, 41) tenant à disposition une information pour identifier le composant (2, 3, 4, 5, 6, 7, 12, 13, 14, 15, 16, 17) et la partie de boîtier en fonte d'aluminium recouvrant la majeure partie, en particulier plus des trois quarts, de la surface du transpondeur RFID (20, 21,41),
qu'un support du transpondeur RFID (20, 21, 41) est noyé dans la partie de boîtier en fonte d'aluminium et disposé non parallèlement à la surface de la partie de boîtier en fonte d'aluminium,
la normale au support faisant un angle avec la normale à la surface de la partie de boîtier en fonte d'aluminium,
qu'une puce qui est connectée à une antenne (45) est disposée sur le support,
et qu'un bord (44) du support fait saillie par rapport au boîtier,
une extrémité d'antenne (46) de l'antenne (45) s'étendant dans la zone du bord (44) en saillie.

2. Unité d'entraînement (1, 11) selon la revendication 1,
**caractérisée en ce que**
le transpondeur RFID (20, 21, 41) présente une zone de mémoire dans laquelle des données, en particulier des données comprenant des paramètres de fonctionnement du composant (2, 3, 4, 5, 6, 7, 12, 13, 14, 15, 16, 17), peuvent être enregistrées, les données étant enregistrées en particulier sous forme de données xml.

3. Unité d'entraînement (1, 11) selon la revendication 1 ou 2,
**caractérisée en ce que**
le transpondeur RFID (20, 21, 41) présente une zone de mémoire dans laquelle des messages, en particulier des messages non réinscriptibles ou effaçables, peuvent être enregistrés, les messages étant enregistrés en particulier sous forme de données xml.

4. Unité d'entraînement (1, 11) selon la revendication 3,
**caractérisée en ce que**
les messages contiennent chaque fois une date et une annotation, en particulier une information de maintenance, l'information de maintenance contenant en particulier un numéro d'intervention, une description d'activité et/ou un rapport d'état concernant le composant (2, 3, 4, 5, 6, 7, 12, 13, 14, 15, 16, 17).

5. Unité d'entraînement (1, 11) selon une des revendications précédentes,
**caractérisée en ce que**
un deuxième composant (6) comprend un lecteur RFID,
la zone de réception sensible du lecteur RFID correspondant en particulier essentiellement aux dimensions de construction de l'unité d'entraînement (1, 11)
ou
le lecteur RFID disposant de moyens pour déterminer la distance à un transpondeur RFID (20, 21, 41), en particulier d'un moyen pour déterminer le temps de réponse du transpondeur RFID (20, 21, 41).

6. Unité d'entraînement (1, 11) selon la revendication 5,
**caractérisée en ce que**
le lecteur RFID est relié à des participants de bus via un bus de données
et/ou
qu'un composant (6) comprend un lecteur RFID qui est connecté à une ligne de bus,
chaque autre composant (2, 3, 4, 5, 6, 7, 12, 13, 14, 15, 16, 17) de l'unité d'entraînement (1, 11) comprenant un transpondeur RFID (20, 21, 41) qui est coulé dans un boîtier moulé sous pression.

7. Unité d'entraînement (1, 11) selon la revendication 5 ou 6,
**caractérisée en ce que**
le lecteur RFID est intégré dans un variateur de vitesse de l'unité d'entraînement (1, 11) ou
que le lecteur RFID est intégré dans un module de surveillance d'état (7).

8. Unité d'entraînement (1, 11) selon la revendication 5 ou 6,
**caractérisée en ce que**
le lecteur RFID comprend des moyens pour émettre sur différentes fréquences, par exemple dans la gamme UHF et à 13,56 MHz, et les transpondeurs RFID (20, 21, 41) comprennent une antenne (45) qui est optimisée pour toutes les fréquences utilisables.

9. Unité d'entraînement selon une des revendications 5 à 8,
**caractérisée en ce que**
le deuxième composant (6) comprend des moyens pour générer un signal de tension, premier (2, 3, 4, 5, 7, 12, 13, 14, 15, 17) et deuxième composant (6) étant en particulier couplés électriquement pour transmettre les signaux générés.

10. Unité d'entraînement selon une des revendications 5 à 9,
**caractérisée en ce que**
le deuxième composant (6) comprend un moyen pour générer un signal de tension dans le boîtier et le premier composant (2, 3, 4, 5, 7, 12, 13, 14, 15, 17) comprend un moyen (48) pour détecter le signal de tension transmis par le boîtier et est couplé électriquement avec le deuxième composant (6).

11. Unité d'entraînement selon une des revendications 5 à 10,
**caractérisée en ce que**
le deuxième composant (6) comprend des moyens pour générer un signal de bruit solidien (35, 36, 37), premier (2, 3, 4, 5, 7, 12, 13, 14, 15, 17) et deuxième composant (6) étant en particulier couplés mécaniquement pour transmettre les signaux générés.

12. Unité d'entraînement selon une des revendications 5 à 11,
**caractérisée en ce que**
le deuxième composant (6) comprend un moyen pour générer un signal de bruit solidien (35, 36, 37) dans le boîtier et le premier composant (2, 3, 4, 5, 7, 12, 13, 14, 15, 17) comprend un moyen (47) pour détecter le signal de bruit solidien (35, 36, 37) transmis par le boîtier et est couplé mécaniquement avec le deuxième composant (2, 3, 4, 5, 7, 12, 13, 14, 15, 17), en particulier pour la transmission du bruit solidien.

13. Unité d'entraînement selon une des revendications précédentes,
**caractérisée en ce que**
les composants (2, 3, 4, 5, 6, 7, 12, 13, 14, 15, 16, 17) comprennent un coffret de branchement de moteur (6), un carter de moteur, un carter de variateur de vitesse ou un carter de réducteur.
